# EUROPÄISCHE PATENTSCHRIFT

(11) **EP 1 551 894 B1**
(45) Veröffentlichungstag und Bekanntmachung des Hinweises auf die Patenterteilung: **22.08.2007**
(21) Anmeldenummer: 03750624.3
(22) Anmeldetag: 25.09.2003
(51) Int. Cl.: C08G 18/10, C08G 18/38, C08G 18/48

(54) **ZWEIKOMPONENTE-SYSTEME FÜR DIE HERSTELLUNG ELASTISCHER BESCHICHTUNGEN**
TWO COMPONENT SYSTEM FOR THE PRODUCTION OF ELASTIC COATINGS
SYSTEMES A DEUX CONSTITUANTS PERMETTANT LA PRODUCTION DE REVETEMENTS ELASTIQUES

(30) Priorität: 07.10.2002 DE 10246708
(43) Veröffentlichungstag der Anmeldung: 13.07.2005
(73) Patentinhaber: Bayer MaterialScience AG, 51368 Leverkusen (DE)
(72) Erfinder: NIESTEN, Meike, 51061 Köln (DE); SCHMALSTIEG, Lutz, 50676 Köln (DE); SIMON, Joachim, 40589 Düsseldorf (DE)
(86) Internationale Anmeldenummer: PCT/EP2003/010662
(87) Internationale Veröffentlichungsnummer: WO 2004/033517

(56) Entgegenhaltungen:
- EP-A- 0 403 921
- EP-A- 1 081 171
- EP-B- 1 027 381
- US-A- 6 013 755

## Beschreibung

Die vorliegende Erfindung betrifft Zweikomponenten-Beschichtungssysteme mit verlängerter Topfzeit für die Herstellung von elastischen Beschichtungen. Die Beschichtungssysteme umfassen Polyurethan-Prepolymere basierend auf in Gegenwart von Doppehnetallcyanid(DMC)-Katalysatoren hergestellten Polyether-Polyolen sowie aminofunktionelle Polyasparaginsäureester als Härter.

Zweikomponenten-Beschichtungssysteme auf Polyurethan- oder Polyharnstoff-Basis sind bekannt und werden in der Technik eingesetzt. In der Regel enthalten sie eine flüssige Polyisocyanat-Komponente und eine flüssige Isocyanat-reaktive Komponente. Durch Reaktion von Polyisocyanaten mit Aminen als Isocyanat-reaktive Komponente entstehen stark vernetzte lösemittelfreie Polyharnstoff-Beschichtungen. Primäre Amine und Isocyanate reagieren jedoch meistens sehr schnell miteinander. Typische Topf- oder Gelierzeiten betragen oft nur einige Sekunden bis wenige Minuten. Deshalb können solche Polyharnstoff Beschichtungen nicht manuell, sondern nur mit speziellen Spritzapparaturen appliziert werden. Solche Beschichtungen besitzen jedoch ausgezeichnete physikalische Eigenschaften.

Die Reaktion zwischen Polyisocyanaten und Aminen kann verzögert werden durch Verwendung von sekundären Aminen. EP-A 403 921 und US-A 5 126 170 offenbaren die Bildung von Polyharnstoff-Beschichtungen durch Reaktion von Polyasparaginsäureestem mit Polyiscyanaten. Polyasparaginsäureester besitzen eine niedrige Viskosität und eine verringerte Reaktivität gegenüber Polyisocyanaten und können daher zur Herstellung lösemittelfreier Beschichtungsmittel mit verlängerten Topfzeiten eingesetzt werden. In vielen Fällen erweisen sich die Topfzeiten jedoch als immer noch zu kurz für eine technische Anwendbarkeit, insbesondere eine manuelle Applikation. Außerdem ist die Anwendbarkeit dieser Systeme durch ihre mechanischen Eigenschaften beschränkt.

EP-A-1 081 171 offenbart die Bildung von Polyharnstoff-Beschichtungen durch Reaktionen von Polyasparaginsäureestern mit Prepolymeren basierend auf in Gegenwart von KOH-Katalysatoren hergestellten Polyetherpolyolen.

Es wurden nun Beschichtungsmittel gefunden, die ausreichend lange Topfzeiten aufweisen, um auch eine manuelle Applikation zu ermöglichen, und mit denen sich elastische Beschichtungen mit verbesserten mechanischen Eigenschaften herstellen lassen.

Gegenstand der Erfindung sind Zweikomponenten-Beschichtungssysteme, enthaltend
(i) ein freie Isocyanatgruppen aufweisendes Prepolymer mit einem NCO-Gehalt von 0,4 bis 12 Gew.-%, vorzugsweise 1 bis 7 Gew.-%, besonders bevorzugt 1,5 bis 4 Gew.-%, erhältlich durch Umsetzung eines Di- oder Polyisocyanats mit einem oder mehreren durch Alkoxylierung hydroxyfunktioneller Startermoleküle in Gegenwart von Doppelmetallcyanid (DMC)-Katalysatoren erhältlichen Polyoxyalkylenpolyolen mit einer mittleren Hydroxyfünktionalität von 1,96 bis 6 und einem Äquivalentgewicht von mindestens 250 g/Mol, und
(ii) einen aminofunktionellen Polyasparaginsäureester der allgemeinen Formel 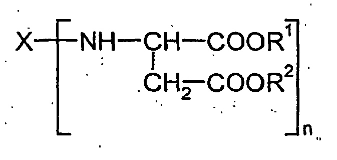 in der
   - X: für einen n-wertigen organischen Rest steht, der durch Entfernung der Aminogruppen aus einem Polyamin, ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Di-aminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3'-Dimethyl-4,4'-diamino-dicyclo-hexylmethan, 2,4,4'-Triamino-5-methyl-dicyclohexylmethan und Polyetherpolyaminen mit aliphatisch gebundenen primären Amino-gruppen mit einem Molekulargewicht von 148 bis 6000 erhalten wird,
   - R₁ und R₂: für gleiche oder verschiedene organische Reste stehen, die unter den Reaktionsbedingungen gegenüber Isocyanatgruppen inert sind, mit der Maßgabe, dass R¹ und R² Ethyl sind, wenn X für den Rest steht, der durch Entfernung der Aminogruppen aus 2,4,4'-Triämino-5-methyl-dicyclohexylmethan erhalten worden ist und
   - n: für eine ganze Zahl von mindestens 2 steht.

Die Isocyanatkomponente (i) ist ein Isocyanatgruppen aufweisendes Prepolymer mit einem NCO-Gehalt von 0,4 bis 12 Gew.-%, vorzugsweise 1 bis 7 Gew.-%, besonders bevorzugt 1,5 bis 4 Gew.-%, das erhältlich ist durch Umsetzung mindestens eines Polyisocyanats mit einem oder mehreren Polyoxyalkylenpolyolen, die durch Alkoxylierung von hydroxyfunktionellen Starterverbindungen mit einem oder mehreren Alkylenoxid(en), bevorzugt Propylenoxid oder Gemischen aus . Propylenoxid und Ethylenoxid, in Gegenwart von DMC-Katalysatoren erhältlich sind und eine mittlere Hydroxyfunktionalität von 1,96 bis 6, bevorzugt 1,96 bis 3 und ein Äquivalentgewicht von mindestens 250 g/Mol bzw. ein zahlenmittleres Molekulargewicht von 500 bis 20000, vorzugsweise 1000 bis 8000, besonders bevorzugt 2000 bis 6000 g/Mol aufweisen.

Geeignete DMC-Katalysatoren für die Polyaddition von Alkylenoxiden an aktive Wasserstoffatome aufweisende Starterverbindungen sind bekannt. Bevorzugt werden die Polyoxyalkylenpolyole für die Herstellung der erfindungsgemäßen Prepolymere (i) DMC-Katalysatoren auf der Basis von Zinkhexacyanocobaltat eingesetzt, insbesondere solche, die zusätzlich tert.-Butanol als organischem Komplexliganden (allein oder in Kombination mit einem Polyether) enthalten, wie sie EP-A 700 949, EP-A . 761 708 und WO 97/40086 offenbaren. Mit diesen Katalysatoren lassen sich Polyoxyalkylenpolyole erhalten, die im Vergleich zu mit Alkalihydroxiden als Katalysator hergestellten Polyolen einen reduzierten Anteil an monofunktionellen Polyethern mit endständigen Doppelbindungen, sogenannten Monoolen, enthalten. Die erfindungsgemäß einzusetzenden Polyoxyalkylenpolyole weisen typischerweise Doppelbindungsgehalte von weniger als 50 mmol/kg, bevorzugt weniger als 20 mmol/kg und insbesondere weniger als 10 mmol/kg auf,

Als Polyisocyanate kommen aromatische, aliphatische und cycloaliphatische Polyisocyanate in Betracht. Geeignete Polyisocyanate sind Verbindungen der Formel Q(NCO)ₙ mit einem zahlenmittleren Molekulargewicht von weniger als 800 g/Mol, worin n eine Zahl von 2 bis 4 und Q einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten. Beispiele sind Diisocyanate wie Toluylendiisocyanat (TDI), Methylendiphenyldiisocyanat (MDI), Triisocyanatononan (TTN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanato-2,2-dicyclohexylpropan, 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m-xylylen-diisocyanat oder α,α,α',α'-Tetramethyl-p-xylylen-diisocyanat (TMDXDI) sowie aus diesen Verbindungen bestehende Gemische.

Bevorzugt sind cycloaliphatische oder aromatische Diisocyanate, besonders bevorzugt sind Isocyanatomethyl-3,3,5-trimethylcyclohexylisocyanat (IPDI), 2,4-Toluylendiisocyanat bzw. 2,6-Toluylendiisocyanat (TDI) und Methylendiphenyldiisocyanat (MDI), sowie aus diesen Verbindungen bestehende Gemische.

Zur Herstellung der NCO-Prepolymere werden das Polyisocyanat und das Polyoxyalkylenpolyol oder Gemische daraus unter Einhaltung eines NCO/OH Äquivalent-verhältnis von 1,5:1 bis 10:1 unter Urethanbildung umgesetzt. Die Umsetzung findet statt bei Temperaturen von 40 bis 140°C, vorzugsweise 50 bis 110°C. Bei Verwendung eines Überschusses an. Polyisocyanat von mehr als 2:1 wird überschüssiges monomeres Polyisocyanat nach der Umsetzung durch in der Technik übliche destillative oder extraktive Verfahren (z.B. Dünnschichtdestillation) entfernt.

Die Umsetzung kann beschleunigt werden durch Verwendung eines die Urethanbildung beschleunigenden Katalysators. Gebräuchliche Katalysatoren sind Organometallverbindungen, Amine (z.B. tertiäre Amine) oder Metallverbindungen wie Bleioktoat, Quecksilbersuccinat, Zinnoktoat oder Dibutylzinndilaurat. Es werden vorzugsweise 0,001 bis 5 Gew.-%, insbesondere 0,002 bis 2 Gew.-% Katalysator bzw. Katalysatorkombination, bezogen auf das Gesamtgewicht des Prepolymeransatzes, verwendet.

Bevorzugte Härterkomponenten (ii) sind solche aminofunktionellen Polyasparaginsäureester, der allgemeinen Formel 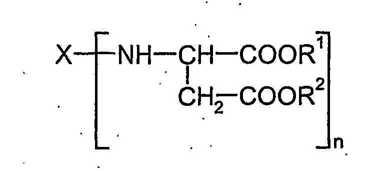 in denen X für einen zweiwertigen Kohlenwasserstoffrest steht, der durch Entfernung der Aminogruppen aus 1,4-Diaminobutan, 1,6-Diaminohexan, 2,2,4- und/oder 2,4,4-Trimethyl-1,6-diaminohexan, 1-Amino-3,3,5-trimethyl-5-aminomethyl-cyclohexan, 4,4'-Diamino-dicyclohexylmethan, oder 3,3'-Dimethyl-4,4'-diamino-dicyclohexylmethan erhalten wird, und n für 2 steht. Besonders bevorzugt sind solche Verbindungen, in denen R₁ und R₂ für Methyl- oder Ethylreste stehen.

Die Herstellung der aminofunktionellen Polyasparaginsäureester (ii) erfolgt in an sich bekannter Weise durch Umsetzung der entsprechenden primären Polyamine der Formel

X-[-NH₂]ₙ

mit Malein- oder Fumarsäureestern der allgemeinen Formel

R¹OOC-CH=CH-COOR²

Geeignete Polyamine sind die oben genannten Diamine. Beispiele geeigneter Malein-oder Fumarsäureester sind Maleinsäuredimethylester, Maleinsäurediethylester, Maleinsäuredibutylester und die entsprechenden Fumarsäureester.

Die Herstellung der aminofunktionellen Polyasparaginsäureester (ii) aus den genannten Ausgangsmaterialien erfolgt bevorzugt innerhalb des Temperaturbereichs von 0 bis 100°C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

Gegenstand der Erfindung sind auch Beschichtungsmittel, die erhältlich sind durch Umsetzung der Komponenten (i) und (ii), wobei diese in solchen Mengen eingesetzt werden, dass das Äquivalentverhältnis der Isocyanatgruppen der Komponente (i) zu' den Aminogruppen der Komponente (ii) 0,5:1 bis 1,5:1, vorzugsweise 0,9:1 bis 1,5:1 beträgt.

Zur Herstellung der erfindungsgemäßen Beschichtungsmittel werden die Einzelkomponenten und gegebenenfalls mitzuverwendende Hilfs- und Zusatzmittel miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit müssen die Reaktionsgemische verarbeitet werden. Die erfindungsgemäßen Beschichtungsmittel weisen bei 23°C eine Topfzeit von 45 bis 150 Minuten, vorzugsweise 60 bis 120 Minuten auf, wobei Topfzeit definiert ist als der Zeitraum, in dem die Beschichtung homogen, ohne Fäden zu ziehen, applizierbar ist.

Beispiele für gegebenenfalls bei der Herstellung der erfindungsgemäßen Beschichtungsmittel mitzuverwendende Hilfs- und Zusatzmittel sind Pigmente, Füllstoffe, Weichmacher wie Steinkohlenteer, oder Verlaufshilfsmittel.

Die erfindungsgemäßen Zwei-Komponenten-Bindemittel eignen sich insbesondere' zur Herstellung elastischer Beschichtungen. Die aus den erfindungsgemäßen Bindemitteln erhältlichen Beschichtungsmittel können nach an sich bekannten Methoden, beispielsweise durch Spritzen, Streichen, Fluten oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilien, Leder oder Papier. Aus den erfindungsgemäßen Beschichtungsmitteln lassen sich Beschichtungen mit hervorragenden mechanischen Eigenschaften erhalten, die eine Härte von mindestens 10 Shore A und eine Bruchdehnung von mindestens 300% aufweisen.

### Beispiele

Beispiele 1-3 beschreiben die Herstellung typischer Prepolymere.

### Beispiel 1

174 g (2 Äq.) 2,4-Toluylendiisocyanat (Desmodur^{®} T100, Bayer AG) wurden bei 50°C unter Stickstoff vorgelegt. Ein Gemisch aus 1800 g (0,9 Äq.) eines Polyoxypropylenglykols mit einem zahlenmittleren Molekulargewicht von 4000 g/Mol (Acclaim^{®} 4200, Bayer AG) und 100 g (0,1 Äq.) eines Polyoxypropylenglykols mit einem zahlenmittleren Molekulargewicht von 2000 g/Mol (Acclaim® 2200, Bayer AG) wurde so langsam zugetropft, dass die Temperatur nicht über 70°C anstieg Nach 28 Stunden Rühren bei einer Reaktionstemperatur zwischen 60 und 70°C war den theoretisch berechnete NCO-Gehalt von 2,03 Gew.-% erreicht. Die Reaktion wurde beendet und das Produkt auf Raumtemperatur abgekühlt.

Das erhaltene NCO-Prepolymer hatte einen NCO-Gehalt von 2,00 Gew.-% und eine Viskosität von 6500 mPa.s bei 23°C.

### Beispiel 2

250 g (2 Äq.) eines Gemischs aus 65 % 2,4'-Diphenylnlethandiisocyanat und 35 % 4,4'-Diphenylmethandiisocyanat (Desmodur^{®} PU1806) wurden bei 60°C unter Stickstoff vorgelegt. Ein Gemisch aus 1200 g (0,6 Äq.) eines Polyoxypropylenglykols mit einem zahlenmittleren Molekulargewicht von 4000 g/Mol (Acclaim^{®} 4200, Bayer AG) und und 400 g (0,4. Äq.) eines Polyoxypropylenglykols mit einem zahlenmittleren Molekulargewicht von 2000 g/Mol (Acclaim®- 2200, Bayer AG) wurde so langsam zugetropft, dass die Temperatur nicht über 70°C anstieg. Nach 12 Stunden Rühren bei einer Reaktionstemperatur zwischen 60 und 70°C war den theoretisch berechnete NCO-Gehalt von 2,27 Gew.-% erreicht. Die Reaktion wurde beendet und das Produkt auf Raumtemperatur abgekühlt.

Das erhaltene NCO-Prepolymer hatte einen NCO-Gehalt von 2,20 Gew.-% und eine Viskosität von 25000 mPa.s bei 23°C.

### Beispiel 3

222 g (2 Äq.) 1-Isocyanato-3-isocyanatomethyl-3,5,5-trimethyl-cyclohexane (Desmodur^{®} I, Bayer AG) wurden bei 60°C unter Stickstoff vorgelegt. Ein Gemisch aus 1400 g (0,7 Äq.) eines Polyoxypropylenglykols mit einem zahlenmittleren Molekulargewicht von 4000 g/Mol (Acclaim® 4200, Bayer AG) und 600 g (0,3 Äq.) eines mit Glycerin gestarteten Polyoxypropylenpolyols mit einem zahlenmittleren Molekulargewicht von 6000 g/Mol (Acclaim® 6300, Bayer AG) ) wurde so langsam zugetropft, dass die Temperatur nicht über 70°C anstieg. Nach dem Zutropfen wurden 0,0022 g (25 ppm) Dibutylzinnlaureat (DBTL) zugesetzt. Während der Reaktion wobei überstieg die Temperatur 70°C nicht. Nach 6 Stunden Rühren bei einer Reaktionstemperatur zwischen 60 und 70°C war den theoretisch berechnete NCÖ-Gehalt von 1,89 Gew.-% erreicht. Die Reaktion wurde beendet und das Produkt auf Raumtemperatur abgekühlt.

Das erhaltene NCO-Prepolymer hatte einen NCO-Gehalt von 1,80 Gew.-% und eine Viskosität von 17000 mPa.s bei 23°C.

### Beispiel 4: Herstellung eines aminofunktionellen Polyasparaginsäureesters

344 g (2 mol) Maleinsäurediethylester wurden bei 50°C unter Rühren zu 210 g (2 Äq.) 4,4'-Diaminodicyclohexylmethan getropft. Nach vollständiger Zugabe liess man 90 h bei 60°C unter N₂-Atmosphäre nachrühren und entwässerte während der letzten beiden Stunden bei ca. 1 mbar. Es wurde ein flüssiges Produkt mit einem Äquivalentgewicht von 277 g/Mol erhalten.

Das nachfolgenden Beispiel beschreibt die Herstellung von Beschichtungen und deren mechanische Eigenschaften.

### Beispiel 5

In Analogie zu den Beispielen 1-3 hergestellte Prepolymere wurden bei Raumtemperatur mit dem in Beispiel 4 hergestellten aminofunktionellen Polyasparaginsäureester gehärtet, wobei ein NCO/NH₂ Verhältnis von 1,05:1 bzw. 1,2:1 eingehalten wurde. In Tabelle 1 sind die Topfzeiten und die mechanischen Eigenschaften der erhaltenen Beschichtungen zusammengestellt. Die Härte Shore A wurde nach DIN 53505 bestimmt, Zugfestigkeit und Bruchdehnung nach DIN/ISO 527, Weiterreißfestigkeit nach DIN 53515.

**Tabelle 1**

| Isocyanat | Polyether* (Acclaim) | NCO-Gehalt [Gew.-%] | NCO/NH Verhältnis | Topfzeit [Min] | Zugfestigkeit [N/mm²] | Bruchdehnung [%] | Weiterreißfestigkeit [N/mm] | Härte [ShoreA] |
|---|---|---|---|---|---|---|---|---|
| MDI | 2200/4200=4/6 | 2,2 | 1,05 | 60 | >10 | >1800 | 8,2 | 27 |
| MDI | 2200/4200=4/6 | 2,2 | 1,2 | 60 | 5,4 | 1270 | 8,6 | 35 |
| MDI | 4200/6300=8/2 | 1,84 | 1,05 | 60 | >2,5 | >1500 | 5,1 | 14 |
| MDI | 4200/6300=8/2 | 1,84 | 1,2 | 60 | 2,5 | 708 | 6,1 | 31 |
| MDI | 2200/6300=7/3 | 1,83 | 1,05 | 60 | 3,6 | 737 | 5,7 | 31 |
| MDI | 2200/6300=7/3 | 1,83 | 1,2 | 60 | 2,8 | 516 | 6,2 | 38 |
| TDI | 2200/4200=1/9 | 2,0 | 1,05 | 70 | - | - | - | 15 |
| TDI | 2200/4200=1/9 | 2,0 | 1,2 | 70 | - | - | - | 15 |
| IPDI | 4200/6300=7/3 | 1,8 | 1,05 | 120 | - | - | - | 25 |
| IPDI | 4200/6300=7/3 | 1,8 | 1,2 | 120 | - | - | - | 26 |
| IPDI | 4200/6300=6/4 | 1,9 | 1,05 | 120 | - | - | - | 28 |
| IPDI | 4200/6300=6/4 | 1,9 | 1,2 | 120 | - | - | - | 27 |
| IPDI | 4200/6300=5/5 | 1,8 | 1,05 | 120 | - | - | - | 30. |
| IPDI | 4200/6300=5/5 | 1,8 | 1,2 | 120 | - | - | - | 31 |

| | | | | | | | | |
|---|---|---|---|---|---|---|---|---|
| *Verhältnis der Polyether im Gemisch basierend auf Äquivalent-Gewicht | | | | | | | | |

## Patentansprüche

1. Zweikomponenten-Beschichtungssystem, umfassend
(i) ein freie Isocyanatgruppen aufweisendes Prepolymer mit einem NCO-Gehalt von 0,4 bis 12 Gew.-%, erhältlich durch Umsetzung eines Di-oder Polyisocyanats mit einem oder mehreren durch Alkoxylierung hydroxyfunktioneller Startermoleküle in Gegenwart von Doppelmetallcyanid-Katalysatoren erhältlichen Polyoxyalkylenpolyolen mit einer mittleren Hydroxyfunktionalität,von 1,96 bis 6 und einem Äquivalentgewicht von mindestens 250 g/Mol, und
(ii) einen aminofunktionellen Polyasparaginsäureester der allgemeinen Formel 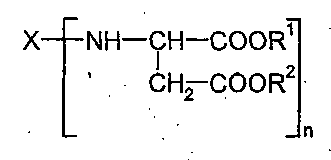 in der
X für einen n-wertigen organischen Rest steht, der durch Entfernung der Aminogruppen aus einem Polyamin, ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-l,6-diaminohexan, 1,11-Dianunoundecan, 1,12-Diaminododecan, 1-Amino-3,3,5-trimethyl-5-aminomethyl-cyclohexan, 2,4-und/oder 2,6-Hexahydrotoluyiendiamin, 2,4'-und/oder 4,4'-Dianüno-dicyclo-hexylmethan, 3,3'-Diinethyl-4,4'-diamino-dicyclohexyl-methan, 2,4,4'-Triamino-5-methyl-dicyclohexylmethan und Polyetherpolyaminen mit aliphatisch gebundenen primären Aminogruppen mit einem Molekulargewicht von 148 bis 6000 erhalten wird,
R¹ und R² für gleiche oder verschiedene organische Reste stehen, die unter den Reaktionsbedingungen gegenüber Isocyanatgruppen inert sind, mit der Maßgabe, dass R₁ und R₂ Ethyl sind, wenn X für den Rest steht, der durch Entfernung der Aminogruppen aus 2,4,4'-Triamino-5-methyl-dicyclohexylmethan erhalten worden ist und
n für eine ganze Zahl von mindestens 2 steht.

2. Beschichtungsmittel, erhältlich durch Umsetzung der Komponenten (i) und (ii) des Zweikomponenten-Beschichtungssystems gemäß Anspruch 1 in einem Mengenverhältnis, das einem NCO/NH₂-Äquivalentverhältnis von 0,5:1 bis 1,5:1 entspricht.

3. Verfahren zur Herstellung elastischer Beschichtungen, bei dem die Komponenten des Zweikomponenten-Beschichtungssystems gemäß Anspruch 1 vermischt werden in einem Mengenverhältnis, das einem NCO/NH₂-Äquivalentverhältnis von 0,5:1 bis 1,5:1 entspricht, die Mischung auf ein Substrat aufgetragen und anschließend ausgehärtet wird.

4. Durch Ausreagieren des Beschichtungsmittels gemäß Anspruch 2 erhältliches Polyharnstoff-Polymer.

## Claims

1. Two-component coating system, comprising
(i) a prepolymer containing free isocyanate groups and having a NCO content of from 0.4 to 12 wt.%, obtainable by reaction of a di- or polyisocyanate with one or more polyoxyalkylene polyols obtainable by alkoxylation of hydroxyfunctional starter molecules in the presence of double metal cyanide catalysts and having a mean hydroxy functionality of from 1.96 to 6 and an equivalent weight of at least 250 g/mol., and
(ii) an amino-functional polyaspartic acid ester of the general formula 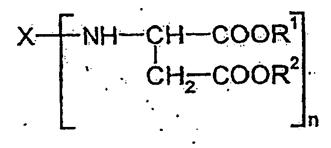
in which
X represents an n-valent organic radical obtained by removal of the amino groups from a polyamine selected from the group consisting of ethylenediamine, 1,2-diamino-propane, 1,4-diaminobutane, 1,6-diamino-hexane, 2,5-diamino-2,5-dimethylhexane, 2,2,4- and/or 2,4,4-trimethyl-1,6-diamino-hexane, 1,11-diaminoundecane, 1,12-diamino-dodecane, 1-amino-3,3,5-trimethyl-5-amino-methyl-cyclohexane, 2,4- and/or 2,6-hexahydrotoluylenediamine, 2,4'- and/or 4,4'-diamino-dicyclohexylmethane, 3,3'-dimethyl-4,4'-diamino-dicyclohexylmethane, 2,4,4'-triamino-5-methyl-dicyclohexylmethane, and polyether polyamines having aliphatically bonded primary amino groups having a molecular weight of from 148 to 6000,
R¹ and R² represent identical or different organic radicals that are inert towards isocyanate groups under the reaction conditions, with the proviso that R¹ and R² are ethyl when X represents the radical obtained by removal of the amino groups from 2,4,4'-triamino-5-methyl-dicyclohexylmethane, and
n represents an integer of at least 2.

2. Coating composition, obtainable by reaction of components (i) and (ii) of the two-component coating system according to claim 1 in relative proportions corresponding to a NCO/NH₂ equivalent ratio of from 0.5:1 to 1.5:1.

3. Process for the preparation of resilient coatings, in which the components of the two-component coating system according to claim 1 are mixed in relative proportions corresponding to a NCO/NH₂ equivalent ratio of from 0.5:1 to 1.5:1, and the mixture is applied to a substrate and then cured.

4. Polyurea polymer obtainable by fully reacting the coating composition according to claim 2.

## Revendications

1. Système de revêtement biconstituant comprenant
(i) un prépolymère présentant des groupes isocyanate libres avec une teneur NCO de 0,4 à 12 % en poids, obtenu par réaction d'un di- ou polyisocyanate avec un ou plusieurs polyoxyalkylènepolyols obtenus par alcoxylation de molécules de départ hydroxyfonctionnelles en présence de catalyseurs de cyanure de métaux doubles avec une fonctionnalité hydroxy moyenne de 1,96 à 6 et un poids d'équivalent d'au moins 250 g/mol, et
(ii) un ester d'acide polyaspartique aminofonctionnel de la formule générale 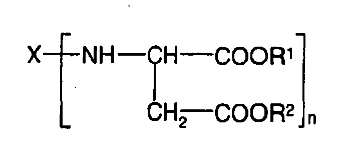
dans laquelle
X représente un reste organique n-valent qui est obtenu par élimination des groupes amino d'une polyamine choisie parmi l'éthylènediamine, le 1,2-diamino-propane, le 1,4-diaminobutane, le 1,6-diaminohexane, le 2,5-diamino-2,5-diméthylhexane, le 2,2,4- et/ou le 2,4,4-triméthyl-1,6-diaminohexane, le 1,11-diamino-undécane, le 1,12-diaminododécane, le 1-amino-3,3,5-triméthyl-5-aminométhyl-cyclohexane, la 2,4-et/ou 2,6-hexahydrotoluylènediamine, le 2,4'- et/ou 4,4'-diamino-dicyclohexylméthane, le 3,3'-diméthyl-4,4'-diamino-dicyclohexylméthane, le 2,4,4'-triamino-5-méthyl-dicyclohexylméthane et des polyéther-polyamines avec des groupes amino primaires aliphatiquement liés ayant un poids moléculaire de 148 à 6 000,
R₁ et R₂ représentent des restes organiques identiques ou différents qui sont inertes dans les conditions de réaction par rapport aux groupes isocyanate avec la condition que R¹ et R² sont le groupe éthyle lorsque X représente le reste qui a été obtenu par élimination des groupes amino du 2,4,4'-triamino-5-méthyl-dicyclohexylméthane et
n représente un nombre entier au moins égal à 2.

2. Agent de revêtement obtenu par réaction des constituants (i) et (ii) du système de revêtement biconstituant selon la revendication 1 dans un rapport de quantités qui correspond au rapport d'équivalents NCO/NH₂ de 0,5:1 à 1,5:1.

3. Procédé pour la préparation de revêtements élastiques, dans lequel les constituants du système de revêtement biconstituant selon la revendication 1 sont mélangés dans un rapport de quantités qui correspond à un rapport d'équivalents NCO/NH₂ de 0,5:1 à 1,5:1, le mélange est appliqué sur un substrat et est ensuite durci.

4. Polymère de polyurée obtenu par réaction de l'agent de revêtement selon la revendication 2.
